**Europäisches Patentamt**

**European Patent Office**

**Office européen des brevets**

(19)

(11) Veröffentlichungsnummer: **0 295 570**
**A2**

(12) ## EUROPÄISCHE PATENTANMELDUNG

(21) Anmeldenummer: **88109168.0**

(22) Anmeldetag: **09.06.88**

(51) Int. Cl.⁴: **H01R 13/66 , H01R 13/502 , H02G 3/18 , H04M 1/02**

(30) Priorität: **13.06.87 DE 8708351 U**

(43) Veröffentlichungstag der Anmeldung:
**21.12.88 Patentblatt 88/51**

(84) Benannte Vertragsstaaten:
**AT BE CH DE ES FR GB GR IT LI LU NL SE**

(71) Anmelder: **BTR BLUMBERGER TELEFON- UND RELAISBAU ALBERT METZ**
**Im Tal 1**
**D-7712 Blumberg(DE)**

(72) Erfinder: **Metz, Albert**
**Ottilienstrasse 9**
**D-7712 Blumberg(DE)**
Erfinder: **Jaag, Dieter**
**General-Horn-Strasse 3**
**D-7730 VS-Villingen(DE)**

(74) Vertreter: **Patentanwälte Dipl.-Ing. Klaus Westphal Dr. rer. nat. Bernd Mussgnug Dr. rer.nat. Otto Buchner**
**Waldstrasse 33**
**D-7730 VS-Villingen(DE)**

(54) **Anschlussdose fur den Anschluss eines Fernsprechapparates.**

(57) Eine Anschlußdose für den Anschluß eines Fernsprechapparates und/oder eines oder mehrerer Fernsprech- Zusatzgeräte weist ein Gehäuseunterteil (10), ein Gehäuseoberteil (12) und eine Abdeckung (14) auf. Zwischen das Gehäuseoberteil (12) und das Gehäuseunterteil (10) ist eine Leiterplatte (16) eingesetzt. Die Anschlußdose nimmt wenigstens eine Steckeraufnahme (24) mit Kontakten (22) auf, wobei die Kontakte (22) mit Lötanschlüssen in die Leiterplatte (16) eingesetzt sind. Erfindungsgemäß ist die Steckeraufnahme (24) einstückig in dem Gehäuseoberteil (12) ausgebildet.

Schnitt C-0

Fig. 3

EP 0 295 570 A2

## Anschlußdose für den Anschluß eines Fernsprechapparates

Die Erfindung betrifft eine Anschlußdose für den Anschluß eines Fernsprechapparates und/oder eines oder mehrerer Fernsprech-Zusatzgeräte gemäß dem Oberbegriff des Anspruchs 1.

Bei einer Anschlußdose dieser Gattung, wie sie aus der DE-PS 32 39 063 bekannt ist, besteht das Gehäuse aus einem Gehäuseunterteil und einem Gehäuseoberteil, zwischen denen die Leiterplatte eingesetzt und gehaltert ist. Das Gehäuseoberteil weist Schächte auf, in welche austauschbare Steckeraufnahmen eingesetzt sind. Die Steckeraufnahmen sind dem jeweiligen Anwendungsfall angepaßt. Gehäuseunterteil und Gehäuseoberteil sowie die Abdeckung der Anschlußdose können daher für eine große Zahl von Anwendungsfällen einheitlich gefertigt und auf-Lager gehalten werden. Nur die Steckeraufnahmen, die die Kontakte enthalten, sind für die einzelnen Anwendungsfälle unterschiedlich ausgebildet. Ausserdem weist das Gehäuseoberteil an der Seite, an welcher der Stekker eingesteckt wird, Durchbrüche auf, die dem Steckerprofil entsprechen, um ein verwechslungsfreies Einstekken der Stecker zu gewährleisten. Ist ein einheitliches Gehäuseoberteil für verschiedene Anwendungsfälle vorgesehen, so müssen Durchbrüche für die verschiedenen Anwendungsfälle als verdünnte Bereiche des Gehäuseoberteils vorgesehen sein, die entsprechend dem jeweiligen Anwendungsfall herausgebrochen werden. Ein einwandfreies Herausbrechen mit exakten Bruchkanten ist schwierig. Daher werden bei der bekannten Anschlußdose in der Praxis unterschiedliche Gehäuseoberteile für die verschiedenen Anwendungsfälle bevorzugt.

Der Erfindung liegt die Aufgabe zugrunde, eine Anschlußdose zu schaffen, die möglichst wenig Einzelteile aufweist und eine einfache Montage ermöglicht.

Diese Aufgabe wird bei einer Anschlußdose der eingangs genannten Gattung erfindungsgemäß gelöst durch die Merkmale des kennzeichnenden Teils des Anspruchs 1.

Vorteilhafte Ausführungsformen der Erfindung sind in den Unteransprüchen angegeben.

Bei der erfindungsgemäßen Anschlußdose sind die Stekkeraufnahmen unmittelbar in dem Gehäuseoberteil ausgebildet, so daß ein gesondertes Teil für die Steckeraufnahme entfällt. Die Anschlußdose weist dementsprechend weniger Einzelteile auf, was die Herstellung und die Montage vereinfacht.

Die dem Steckerprofil entsprechenden Durchbrüche können in dem Gehäuseoberteil ausgebildet sein. Es muß dann für jeden Anwendungsfall ein gesondertes Gehäuseoberteil mit den entsprechend geformten Durchbrüchen hergestellt und auf Lager gehalten werden.

In einer anderen Ausführungsform sind die Durchbrüche in einer gesonderten Platte vorgesehen, die auf das Gehäuseoberteil aufgeschnappt wird. Das Gehäuseoberteil, das die Steckeraufnahme bildet und die Kontakte aufnimmt, kann dabei für die verschiedenen Anwendungsfälle einheitlich ausgebildet sein, es müssen nur mehrere Typen von Platten mit unterschiedlich geformten Durchbrüchen zur Verfügung stehen.

Eine weitere Vereinfachung der Konstruktion und Verringerung der Einzelteile ergibt sich, wenn die Platte mit den Durchbrüchen an der Abdeckung vorgesehen und einstückig mit dieser ausgebildet ist. Auch wenn die Abdeckung an dem Gehäuse befestigt wird, ist auch in diesem Falle ein Aufschnappen der mit der Abdeckung verbundenen Platte auf das Gehäuseoberteil zu bevorzugen, um eine exakte Positionierung der Durchbrüche der Platte in Bezug auf die Steckeraufnahme zu gewährleisten.

Schließlich ist es auch möglich, die Abdeckung und das Gehäuseoberteil als ein einstückiges Spritzgußteil auszubilden, das auch die Durchbrüche für den Steckerquerschnitt aufweist. Dieses Spritzgußteil muß ebenfalls für jeden Anwendungsfall, d.h. für jedes Durchbruchprofil gesondert zur Verfügung stehen. In dieser Ausführungsform ergibt sich die geringste Anzahl von Einzelbauteilen.

Im folgenden wird die Erfindung anhand von in der Zeichnung dargestellten Ausführungsbeispielen näher erläutert. Es zeigen:

Figur 1 - eine Draufsicht auf eine erste Ausführungsform der Anschlußdose,

Figur 2 - einen Schnitt A-B in Figur 1,

Figur 3 - einen Schnitt C-D in Figur 1 und

Figur 4 - einen Figur 2 entsprechenden Schnitt einer zweiten Ausführungsform der Anschlußdose.

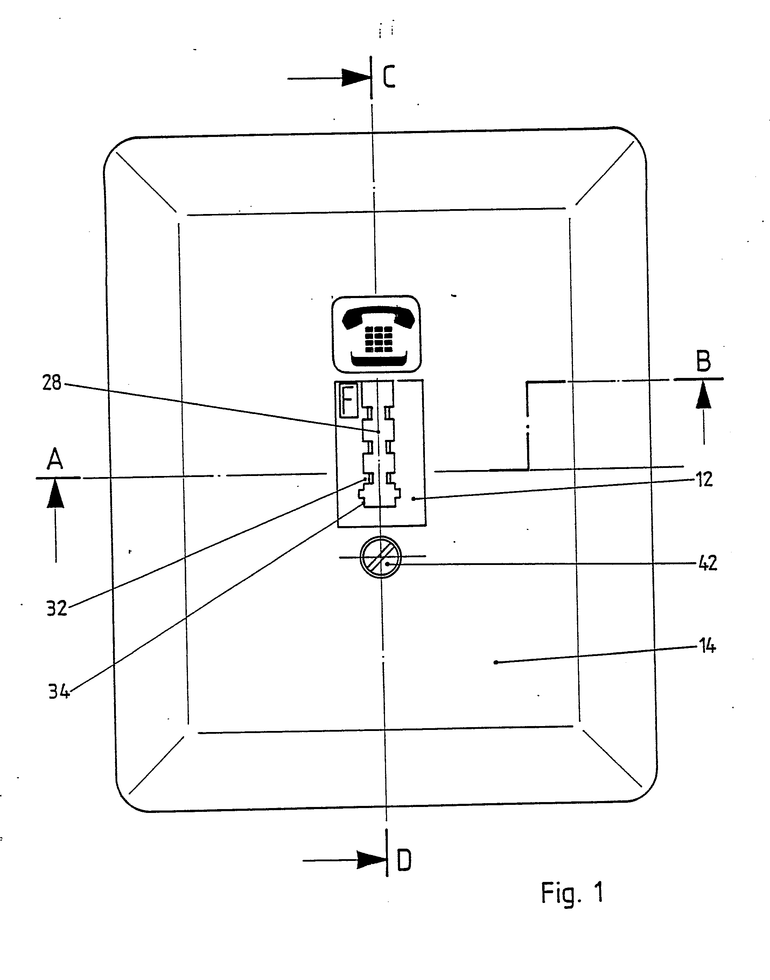

In der in den Figuren 1 bis 3 gezeigten ersten Ausführungsform besteht die Anschlußdose aus einem Gehäuseunterteil 10, einem Gehäuseoberteil 12 und einer Abdekkung 14. Diese Teile sind jeweils Kunststoff-Spritzgußteile. In dem dargestellten Ausführungsbeispiel ist die Anschlußdose als Aufputzdose ausgebildet. Dementsprechend ist die Abdeckung 14 haubenförmig ausgebildet und das Gehäuseunterteil 10 ist mittels Schrauben an der Wand befestigbar.

Das Gehäuseunterteil 10 ist im wesentlichen in Form einer Platte ausgebildet, auf welcher durch Stützen abgestützt eine Leiterplatte 16 aufgelegt ist. Das Gehäuseoberteil 12 sitzt zur Positionierung und Befestigung mittels einer Bohrung auf einem die Leiterplatte 16 durchdringenden Zapfen 18 und übergreift mit seinem dem Gehäuseunterteil 10 zugewandten Rand die Leiterplatte 16. Die Leiterplatte ist durch den Zapfen 18 und den übergreifenden Rand des Gehäuseoberteils 12 in ihrer Lage positioniert und fixiert und wird zwischen dem Gehäuseunterteil 10 und dem Gehäuseoberteil 12 gehaltert.

Auf der Leiterplatte 16 sitzen Anschlußklemmen 20, die mit Lötanschlüssen in die Leiterplatte 16 eingesetzt und mit deren Leiterbahnen verlötet sind. Weiter sind in die Leiterplatte 16 die Lötanschlüsse von federnden Kontakten 22 eingesetzt und zur Verbindung mit den Anschlußklemmen mit den entsprechenden Leiterbahnen verlötet.

Die Kontakte 22 ragen von der Leiterplatte 16 nach oben in eine Steckeraufnahme 24, die in dem Gehäuseoberteil 12 ausgebildet ist. Die Steckeraufnahme 24 weist einander gegenüberliegende Führungsrillen 26 auf, in die die Kontakte 22 eingreifen und in denen die Kontakte 22 gegen eine seitliche Verschiebung festgelegt sind. Etwa auf mittlerer Höhe der Kontakte 22 weist die Steckeraufnahme 24 einen Bodensteg 28 auf, der im Bereich der Führungsrillen 26 durchbrochen ist, damit die Kontakte 22 durch den Bodensteg 28 hindurchgreifen können. Der Bodensteg 28 legt die haarnadelförmig nach innen abgebogenen federnden Schenkel der Kontakte 22 gegen eine seitliche Verschiebung fest.

Die plattenförmige obere Fläche 30 des Gehäuseoberteils 12 ragt mit Vorsprüngen 32 in den Bereich der Steckeraufnahme 24 vor, so daß ein Durchbruch 34 gebildet wird, der dem Steckerprofil des einzusteckenden Stekkers des Fernsprechapparates entspricht. Die Form des Durchbruches 34 gewährleistet damit, daß der Stecker des Fernsprechapparates nur mit der richtigen Polung eingesteckt werden kann.

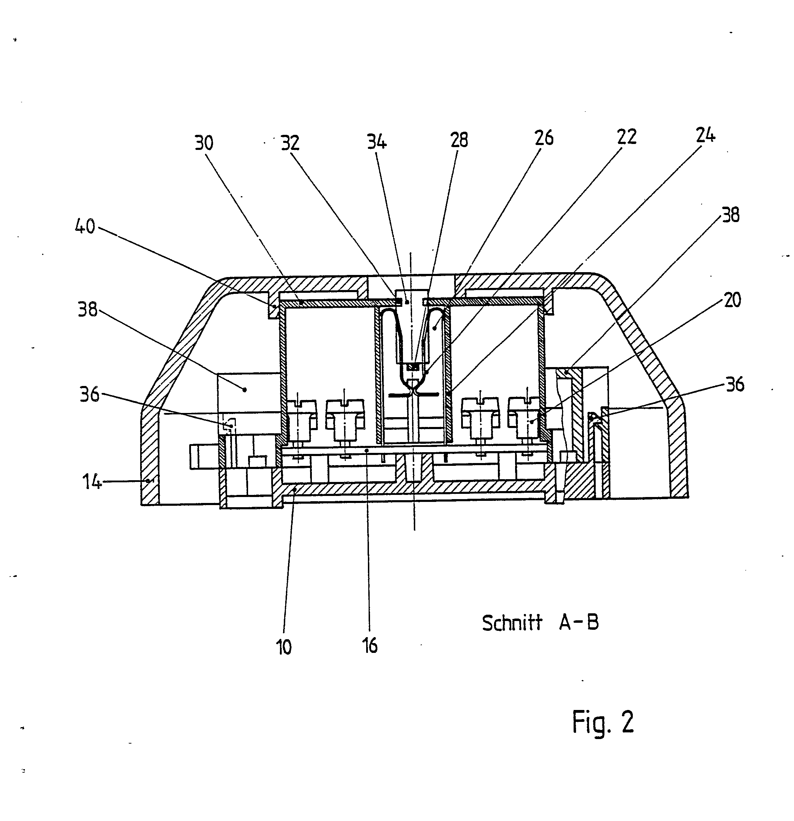

Das Gehäuseoberteil 12 ist mit Rasthaken 36 auf das Gehäuseunterteil 10 aufgeschnappt und mit diesem verbunden, wie Figur 2 zeigt. Dabei deckt eine an dem Gehäuseoberteil 12 einstückig angeformte Kappenleiste 38 die Anschlußklemmen 20 ab.

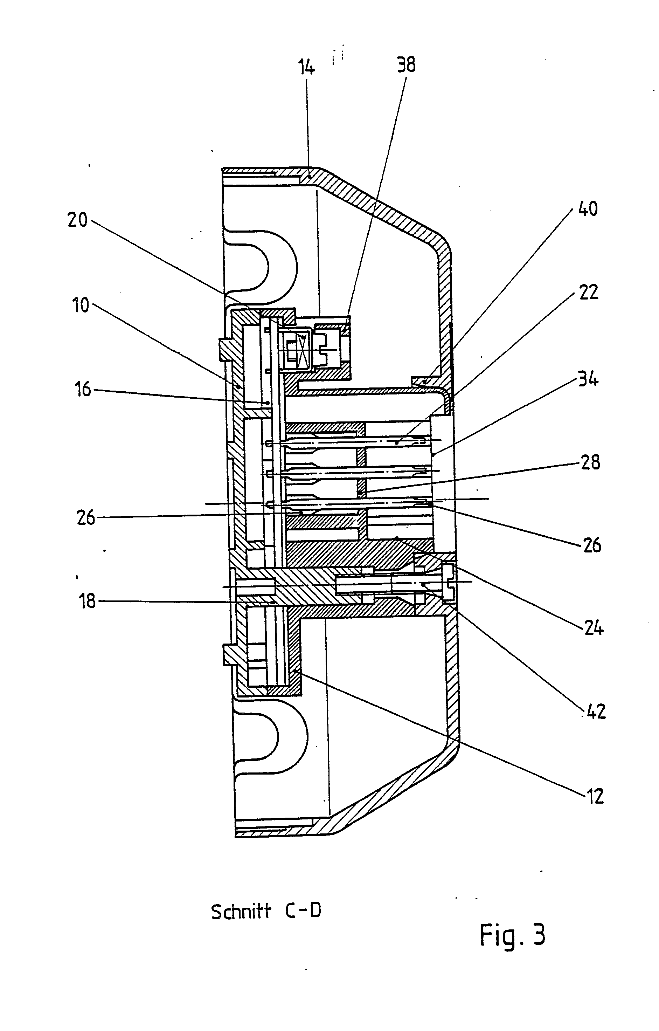

Die Abdeckung 14 wird auf das aus Gehäuseunterteil 10 und Gehäuseoberteil 12 zusammengesetzte Gehäuse aufgesetzt, wobei ein nach Innen vorspringender Rand 40 der Abdeckung 14 das Gehäuseoberteil 12 zur Positionierung der Abdeckung 14 übergreift. Zur Befestigung der Abdeckung 14 dient eine einzige Schraube 42, die in die Abdeckung 14 eingesetzt ist, das Gehäuseoberteil durchgreift und in ein Gewinde des Zapfens 18 des Ge häuseunterteils 10 eingeschraubt wird, wie Figur 3 zeigt.

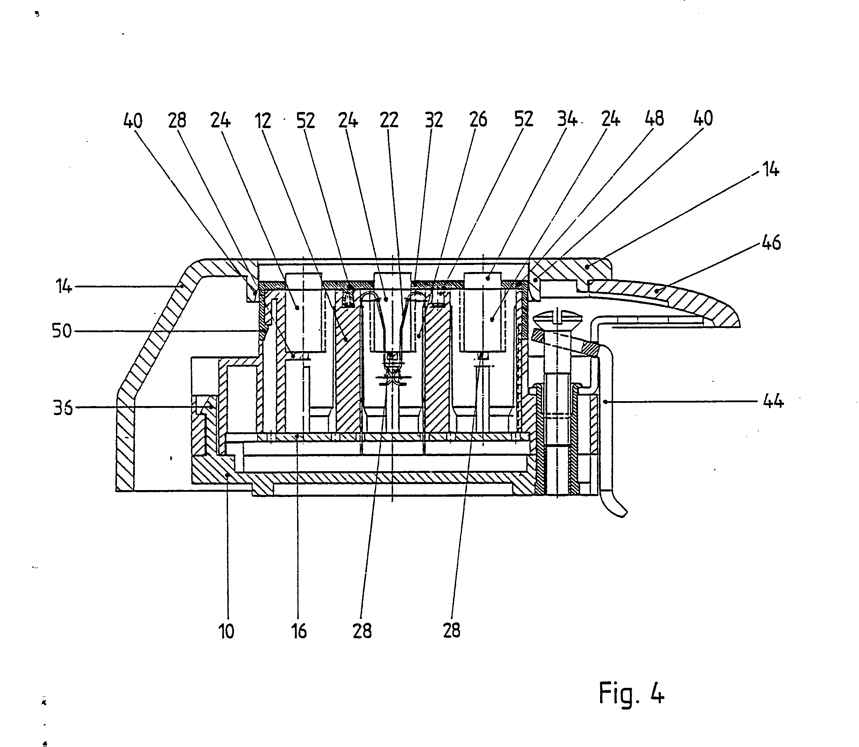

In Figur 4 ist eine weitere Ausführungsform der Anschlußdose gezeigt. In der linken Hälfte der Figur 4 ist eine Aufputzversion und in der rechten Hälfte eine Unterputzversion der Anschlußdose dargestellt. Bei der Aufputzversion sitzt das aus Gehäuseunterteil 10 und Gehäuseoberteil 12 bestehende Gehäuse auf der Wand und die Abdeckung 14 ist haubenförmig. Bei der Unterputzversion ist das aus Gehäuseunterteil 10 und Gehäuseoberteil 12 bestehende Gehäuse in eine Wandausnehmung eingesetzt und wird in bekannter Weise durch Spreizkrallen 44 in der Wandausnehmung gehalten. Die Abdeckung 14 ist in diesem Falle eine flache Platte, die noch durch eine Rosette 46 ergänzt werden kann.

Soweit das Ausführungsbeispiel der Figur 4 mit dem Ausführungsbeispiel der Figuren 1 bis 3 übereinstimmt, sind dieselben Bezugszahlen verwendet und auf die vorangegangene Beschreibung wird verwiesen.

Im Gegensatz zu dem Ausführungsbeispiel der Figuren 1 bis 3 ist bei dem Ausführungsbeispiel der Figur 4 eine Anschlußdose mit drei Steckeraufnahmen 24 dargestellt. Eine der Steckeraufnahmen dient für den Anschluß eines Fernsprechapparates, während die beiden anderen Stekkeraufnahmen zum Anschluß eines weiteren Fernsprechapparates oder eines Zusatzgerätes, wie eines Anrufbeantworters, Fernkopierers, Modemgerätes oder dergleichen dienen. Die Leiterplatte 16 verbindet mit ihren Leiter bahnen die Kontakte 22 der verschiedenen Steckeraufnahmen 24 untereinander und mit den in Figur 4 nicht sichtbaren Anschlußklemmen 20.

Die den Steckerprofilen entsprechenden Durchbrüche 34 sind in diesem Ausführungsbeispiel nicht einstückig in der oberen Fläche des Gehäusecberteils 12 ausgebildet, sondern in einer Platte 48, die oben auf das Gehäuseoberteil 12 aufgesetzt und an diesem mittels Rasthaken 50 und Spreizzapfen 52 positionsgenau festgelegt ist.

Bei dem Ausführungsbeispiel der Figuren 1 bis 3 müssen für jeden Anwendungsfall die Kontakte 22 in der dem zugehörigen Stecker entsprechenden Anordnung eingesetzt werden und es muß ein Gehäuseoberteil 12 mit einem dem jeweiligen Steckerprofil entsprechenden Durchbruch 34 verwendet werden. Bei dem Ausführungsbeispiel der Figur 4 kann dagegen für verschiedene Anwendungsfälle das gleiche Gehäuseoberteil 12 verwendet werden. Es müssen nur die Kontakte 22 entsprechend der Steckerbelegung angeordnet werden und es muß eine Platte 48 mit den jeweiligen Steckerprofilen entsprechenden Durchbrüchen 34 aufgeschnappt werden.

In einer weiteren Ausführungsform ist die in Figur 4 dargestellte Anschlußdose dahingehend abgewandelt, daß die Platte 48 einstückig mit der Abdeckung 14 ausgebildet ist. In dieser Ausführungsform ist die Anzahl der zu montierenden Einzelteile weiter reduziert. Es müssen jedoch Abdeckungen 14 mit unterschiedlich geformten Durchbrüchen 34 für die verschiedenen Anwendungsfälle zur Verfügung stehen.

Auch das Ausführungsbeispiel der Figuren 1 bis 3 kann zur weiteren Verringerung der Einzelteile dahingehend abgewandelt werden, daß das Gehäuseoberteil 12 einstükkig mit der Abdeckung 14 ausgebildet ist.

## Ansprüche

1. Anschlußdose für den Anschluß eines Fernsprechapparates und/oder eines oder mehrerer Fernsprech- Zusatzgeräte mit einem Gehäuseunterteil (10), mit einem Gehäuseoberteil (12), mit einer Abdeckung (14), mit einer zwischen dem Gehäuseunterteil (10) und dem Gehäuseoberteil (12) eingesetzten Leiterplatte (16), mit wenigstens einer Steckeraufnahme (24) und mit in der wenigsten einen Steckeraufnahme (24) angeordneten Kontakten (22), die mit Lötanschlüssen in die Leiterplatte (16) eingesetzt und mit dieser verlötet sind, dadurch gekennzeichnet, daß die wenigstens eine Steckeraufnahme (24) einstückig in dem Gehäuseoberteil (12) ausgebildet ist.

2. Anschlußdose nach Anspruch 1, dadurch gekennzeichnet, daß steckerseitig an der wenigstens einer Steckeraufnahme (24) ein dem Steckerprofil entsprechender Durchbruch (34) vorgesehen ist.

3. Anschlußdose nach Anspruch 2, dadurch gekennzeichnet, daß der Durchbruch (34) in der oberen Fläche (30) des Gehäuseoberteils (12) ausgebildet ist.

4. Anschlußdose nach Anspruch 2, dadurch gekennzeichnet, daß der Durchbruch (34) in einer an der Ober seite des Gehäuseoberteils (12) befestigbaren, vorzugsweise aufschnappbaren Platte (48) ausgebildet ist.

5. Anschlußdose nach Anspruch 4, dadurch gekennzeichnet, daß die Platte (48) einstückig mit der Abdekkung (14) ausgebildet ist.

6. Anschlußdose nach einem der Ansprüche 1 bis 3, dadurch gekennzeichnet, daß das Gehäuseoberteil (12) einstückig mit der Abdeckung (14) ausgebildet ist.

7. Anschlußdose nach einem der vorhergehenden Ansprüche, dadurch gekennzeichnet, daß die wenigstens eine Steckeraufnahme (24) einen einstückig mit dem Gehäuseoberteil (12) ausgebildeten Bodensteg (28) aufweist.

8. Anschlußdose nach einem der vorhergehenden Ansprüche, dadurch gekennzeichnet, daß an dem Gehäuseoberteil (12) eine Kappenleiste (38) für auf der Leiterplatte (16) angeordnete Anschlußklemmen (20) einstückig angeformt ist.

9. Anschlußdose nach einem der vorhergehenden Ansprüche, dadurch gekennzeichnet, daß das Gehäuseoberteil (12) und das Gehäuseunterteil (10) mittels Rasthaken (36) miteinander verbindbar sind.

Fig. 1

Schnitt A-B

Fig. 2

Schnitt C-D

Fig. 3

Fig. 4